# EUROPEAN PATENT SPECIFICATION

(11) **EP 4 471 898 B1**
(45) Date of publication and mention of the grant of the patent: **11.11.2026**
(21) Application number: 23860681.8
(22) Date of filing: 19.07.2023
(51) Int. Cl.: H01M 4/136, H01M 4/36, H01M 4/38, H01M 4/62, H01M 10/052, H01M 4/02

(54) **POSITIVE ELECTRODE MATERIAL FOR LITHIUM-SULFUR BATTERY AND LITHIUM-SULFUR BATTERY INCLUDING THE SAME**
POSITIVELEKTRODENMATERIAL FÜR LITHIUM-SCHWEFEL-BATTERIE UND LITHIUM-SCHWEFEL-BATTERIE DASSELBE UMFASSEND
MATÉRIAU D'ÉLECTRODE POSITVE POUR BATTERIE LITHIUM-SOUFRE ET BATTERIE LITHIUM-SOUFRE LE COMPRENANT

(30) Priority: 31.08.2022 KR 20220110404
(43) Date of publication of application: 04.12.2024
(73) Proprietor: LG Energy Solution, Ltd., Seoul 07335 (KR); Seoul National University R&DB Foundation, Seoul 08826 (KR)
(72) Inventor: KIM, Il-To, Daejeon 34122 (KR); LEE, Jong-Chan, Seoul 08830 (KR); KIM, Soo-Hyun, Daejeon 34122 (KR); YANG, Seung-Bo, Daejeon 34122 (KR); YOOK, Jin-Sol, Seoul 06977 (KR); JEONG, Da-Un, Seoul 01417 (KR)
(74) Representative: Goddar, Heinz J.
(86) International application number: PCT/KR2023/010451
(87) International publication number: WO 2024/048999

(56) References cited:
- EP-A1- 3 018 736
- EP-A1- 3 910 706
- CN-A- 110 732 314
- KR-A- 20170 085 195
- KR-A- 20200 033 737
- KR-A- 20200 049 685
- KR-A- 20220 020 118
- G. ZHENG ET AL: "Amphiphilic Surface Modification of Hollow Carbon Nanofibers for Improved Cycle Life of Lithium Sulfur Batteries", vol. 13, no. 3, 8 February 2013 (2013-02-08), pages 1265 - 1270, XP093333147, Retrieved from the Internet <URL:https://pubs.acs.org/doi/pdf/10.1021/nl304795g> [retrieved on 20251106], DOI: 10.1021/nl304795g
- WANG CHENG, CHEN PENG, WANG YINAN, CHEN TAO, LIU MINGLIANG, ZHANG MINGCHANG, FU YONGSHENG, XU JIANQIANG, FU JIAJUN: "Synergistic Cation–Anion Regulation of Polysulfides by Zwitterionic Polymer Binder for Lithium–Sulfur Batteries", ADVANCED FUNCTIONAL MATERIALS, WILEY - V C H VERLAG GMBH & CO. KGAA, DE, vol. 32, no. 34, 1 August 2022 (2022-08-01), DE , pages 2204451, XP093144924, ISSN: 1616-301X, DOI: 10.1002/adfm.202204451

## Description

### TECHNICAL FIELD

The present disclosure relates to a positive electrode material for a lithium-sulfur battery and a lithium-sulfur battery including the same.

### BACKGROUND ART

A lithium-sulfur battery is a battery system using a sulfur-based material having a sulfur-sulfur (S-S) bond as a positive electrode active material and lithium metal as a negative electrode active material. Sulfur as a main ingredient of the positive electrode active material is advantageous in that it is rich in resources all over the world, has no toxicity and shows a low atomic weight.

As the spectrum of application of secondary batteries is extended to electric vehicles (EVs), energy storage systems (ESSs), or the like, the technology of lithium sulfur batteries capable of realizing a theoretically higher energy storage density per weight (~2,500 Wh/kg), as compared to lithium-ion secondary batteries having a relatively lower energy storage density per weight (~250 Wh/kg), has been spotlighted.

In the lithium-sulfur battery, during discharge, while lithium as a negative electrode active material donates an electron and is ionized and oxidized into a lithium cation, a sulfur-based material as a positive electrode active material accepts the electron and is reduced. Herein, the S-S bond accepts two electrons through the reduction of the sulfur-based material and is converted into a sulfur anion form. The lithium cation produced by the oxidation of lithium is transferred to a positive electrode through an electrolyte, and is bound with the sulfur anion produced by the reduction of the sulfur-based compound to form a salt. Particularly, sulfur before discharge has a cyclic S₈ structure, which is converted into lithium polysulfide (Li₂Sₓ) through the reduction and is reduced completely to produce lithium sulfide (Li₂S).

As such, since sulfur used for the positive electrode active material is an insulator, there are problems to be solved in that electrons produced through the electrochemical reactions are hard to be transported, and the capacity of a battery is decreased rapidly due to the elution of lithium polysulfide (LiSₓ) generated during charge/discharge cycles, or the like.

For example, lithium polysulfide is formed while sulfur used in the positive electrode is reduced during discharge, and the formed lithium polysulfide is dissolved in an ether-based liquid electrolyte and eluted from the positive electrode. The eluted lithium polysulfide passes through the separator and arrives at the negative electrode to cause side reactions with lithium metal, thereby forming an unstable interface. This causes the loss of sulfur as a positive electrode active material, and such a series of processes is called 'shuttle effect' .

Under these circumstances, there is a need for a technology of inhibiting the loss of the energy density of a battery, caused by such a shuttle effect.

EP 3 910 706 A1 discloses a sulfur-carbon composite comprising a porous carbon material and sulfur contained in at least a portion of the interior and surface of the porous carbon material, wherein the surface of the porous carbon material is coated with a thiophene-based polymer doped with a dopant.

CN 110 732 314 A refers to a composite porous carbon for sulfur fixation having a core-shell structure, wherein the core is porous carbon and the shell is a polythiophene film.

KR 2022 0020118 A describes a positive electrode active material for a lithium-sulfur battery, comprising a particulate structure having a core-shell structure, wherein the core part comprises a sulfur compound and the shell part comprises a polythiophene acetic acid-polyethylene glycol graft copolymer.

KR 2020 0033737 A discloses a sulfur-carbon composite comprising an electrically conductive network-type polymer coating layer, wherein the conductive polymer is polythiophene.

KR 2017 0085195 A is directed to a cathode active material containing sulfur with an electron- and ion-conductive polymer coating layer coated on the surface thereof, wherein the polymer comprises one or two or more electron conductive polymer blocks which can be selected from polythiophene.

EP 3 018 736 A1 discloses a cathode for a lithium-sulfur battery, comprising a cathode active part comprising a sulfur-carbon composite, and a cathode coating layer provided on at least one portion of a surface of the cathode active part and including an amphiphilic polymer including a hydrophilic portion and a hydrophobic portion.

G. Zheng et al. in Nano Letters, vol. 13, no. 3, 8 February 2013 (2013-02-08), pages 1265-1270 teach the amphiphilic surface modification of hollow carbon nanofibers with the aim to improve the cycle life of lithium-sulfur batteries.

C. Wang et al. in Advanced Functional Materials, vol. 32, no. 34, 1 August 2022 (2022-08-01), page 2204451 describe the synergistic cation-anion regulation of polysulfides by zwitterionic polymer binder for lithium-sulfur batteries.

KR 2020 0049685 A refers to a sulfur-carbon composite comprising a porous carbon material comprising interior and exterior surfaces coated with a polymer comprising an ion-conductive functional group and an electron-conductive functional group, and sulfur present on at least a portion of inside pores and on a surface of the porous carbon material.

### DISCLOSURE

### Technical Problem

The present disclosure is designed to solve the problems of the related art, and therefore the present disclosure is directed to providing a sulfur-carbon composite totally or partially surface-coated with a polymer in order to inhibit the elution of lithium polysulfide from the positive electrode of a lithium-sulfur battery, and a method for preparing the sulfur-carbon composite.

Particularly, the present disclosure is directed to providing a lithium-sulfur battery which is inhibited from the shuttle effect by the coating structure of the sulfur-carbon composite and has excellent discharge capacity and capacity retention by inhibiting the volumetric swelling of the positive electrode.

### Technical Solution

In one aspect of the present disclosure, there is provided a sulfur-carbon composite according to any one of the following embodiments.

According to the first embodiment of the present disclosure, there is provided a sulfur-carbon composite which includes:
a porous carbonaceous matrix; and a sulfur-containing compound contained in at least one of the outer surface of the porous carbonaceous matrix and the inner surfaces of the pores of the porous carbonaceous matrix, and
is totally or partially surface-coated with an amphiphilic polythiophene.

According to the second embodiment of the present disclosure, there is provided the sulfur-carbon composite as defined in the first embodiment, wherein the amphiphilic polythiophene includes 3-alkyl substituted thiophene, which refers to thiophene substituted with an alkyl group at 3-position of thiophene, as a repeating unit, wherein the alkyl group may include at least one cationic functional group and at least one anionic functional group.

According to the third embodiment of the present disclosure, there is provided the sulfur-carbon composite as defined in the second embodiment, wherein the cationic functional group may include a quaternary amine structure.

According to the fourth embodiment of the present disclosure, there is provided the sulfur-carbon composite as defined in the second embodiment, wherein the anionic functional group may include at least one functional group selected from -SO₃⁻, -COO⁻, - SO₄²⁻ and a conjugate acid thereof.

According to the fifth embodiment of the present disclosure, there is provided the sulfur-carbon composite as defined in any one of the first to the fourth embodiments, wherein the amphiphilic polythiophene may include a polymer represented by the following Chemical Formula 1:

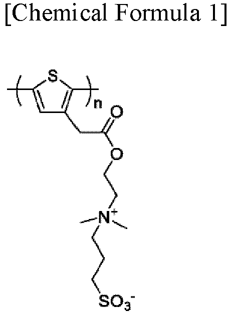

According to the sixth embodiment of the present disclosure, there is provided the sulfur-carbon composite as defined in any one of the first to the fifth embodiments, wherein the amphiphilic polythiophene may include a polymer represented by the following Chemical Formula 2:

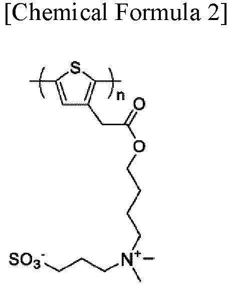

According to the seventh embodiment of the present disclosure, there is provided the sulfur-carbon composite as defined in any one of the first to the sixth embodiments, wherein the amphiphilic polythiophene may include a polymer represented by the following Chemical Formula 3:

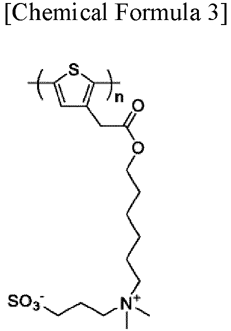

According to the eighth embodiment of the present disclosure, there is provided the sulfur-carbon composite as defined in any one of the first to the seventh embodiments, wherein the porous carbonaceous matrix may include carbon black, carbon fibers, carbon nanotubes (CNTs), graphene, graphene oxide (GO), reduced graphene oxide (rGO), graphite, graphite nanofibers (GNFs), carbon nanofibers (CNFs), activated carbon fibers (ACFs), natural graphite, artificial graphite, expandable graphite, activated carbon, fullerene, or two or more materials of them.

According to the ninth embodiment of the present disclosure, there is provided the sulfur-carbon composite as defined in any one of the first to the eighth embodiments, wherein the sulfur-containing compound may include inorganic sulfur (S₈), lithium sulfide (Li₂S), lithium polysulfide (Li₂Sₓ, 2 ≤ x ≤ 8), disulfide compound, or a mixture of two or more of them.

In another aspect of the present disclosure, there is provided a method for preparing a sulfur-carbon composite according to any one of the following embodiments.

According to the tenth embodiment of the present disclosure, there is provided a method for preparing a sulfur-carbon composite, including the steps of:
preparing a non-coated sulfur-carbon composite including: a porous carbonaceous matrix; and a sulfur-containing compound supported in at least one of the outer surface of the porous carbonaceous matrix and the inner surfaces of the pores of the porous carbonaceous matrix;
coating the surface of the non-coated sulfur-carbon composite totally or at least partially with an amphiphilic thiophene monomer; and
providing a sulfur-carbon composite totally or partially surface-coated with an amphiphilic polythiophene formed through the polymerization of the coated amphiphilic thiophene monomer.

According to the eleventh embodiment of the present disclosure, there is provided the method for preparing a sulfur-carbon composite as defined in the tenth embodiment, wherein the amphiphilic thiophene monomer may be obtained by a method including the steps of:
(S10) activating the carboxylic acid group of 3-carboxyalkyl thiophene;
(S20) reacting the activated 3-carboxyalkyl thiophene compound with a dialkylaminoalcohol compound to form a dialkylaminoalkyl thiophenylalkylcarboxylate compound; and
(S30) substituting the dialkylaminoalkyl thiophenylalkylcarboxylate compound with at least one anionic functional group to obtain the amphiphilic thiophene monomer.

According to the twelfth embodiment of the present disclosure, there is provided the method for preparing a sulfur-carbon composite as defined in the eleventh embodiment, wherein the 3-carboxyalkyl thiophene may include 2-thiopheneacetic acid.

According to the thirteenth embodiment of the present disclosure, there is provided the method for preparing a sulfur-carbon composite as defined in the eleventh embodiment, wherein the dialkylaminoalcohol compound may include 2-dimethylaminoethanol, 2-dimethylaminobutanol, 6-dimethylaminohexanol, or a mixture of two or more of them.

According to the fourteenth embodiment of the present disclosure, there is provided the method for preparing a sulfur-carbon composite as defined in the eleventh embodiment, wherein the substitution with an anionic functional group may be carried out by using a cyclic sulfonic acid compound.

According to the fifteenth embodiment of the present disclosure, there is provided the method for preparing a sulfur-carbon composite as defined in the eleventh embodiment, wherein the substitution with an anionic functional group may be carried out by using 1,3-propane sultone.

In still another aspect of the present disclosure, there is provided a positive electrode for a lithium-sulfur battery according to the following embodiment.

According to the sixteenth embodiment of the present disclosure, there is provided a positive electrode for a lithium-sulfur battery, including: the sulfur-carbon composite as defined in any one of the first to the ninth embodiments; and a binder polymer.

In yet another aspect of the present disclosure, there is provided a lithium-sulfur battery according to the following embodiment.

According to the seventeenth embodiment of the present disclosure, there is provided a lithium-sulfur battery including a positive electrode, a negative electrode, a separator interposed between the positive electrode and the negative electrode, and an electrolyte, wherein the positive electrode includes the positive electrode as defined in the sixteenth embodiment.

### Advantageous Effects

The sulfur-carbon composite according to the present disclosure has a coating structure derived from an amphiphilic polythiophene, and thus can provide an effect of inhibiting the elution of lithium polysulfide during the operation of a lithium-sulfur battery including a positive electrode using the same. In this manner, it is possible to provide a lithium-sulfur battery with not only improved discharge capacity but also excellent battery capacity retention after repeating cycles.

In addition, it is possible to reduce the problem of the swelling of a positive electrode during the operation of a lithium-sulfur battery and to provide the lithium-sulfur battery with improved safety, by virtue of the coating structure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 shows the spectrum of ¹H NMR (nuclear magnetic resonance spectrometry) result of the amphiphilic thiophene monomer according to Preparation Example 1-1.
FIG. 2 shows the spectrum of ¹H NMR result of the amphiphilic thiophene monomer according to Preparation Example 1-2.
FIG. 3 shows the spectrum of ¹H NMR result of the amphiphilic thiophene monomer according to Preparation Example 2.
FIG. 4 shows the spectrum of ¹H NMR result of the amphiphilic thiophene monomer according to Preparation Example 3.
FIG. 5 illustrates the results of the cycle test of the lithium-sulfur coin cells using Comparative Example 1 (KB/S) and Example 1 (P(TqAZ2) 3.0 wt%).
FIG. 6 is a graph illustrating the results of the cycle test of the lithium-sulfur coin cells using Comparative Example 1 (KB/S), Example 2 (P(TqAZ6) 0.1 wt%), Example 3 (P(TqAZ6) 0.2 wt%), Example 4 (P(TqAZ6) 0.5 wt%) and Example 5 (P(TqAZ6) 1.0 wt%).

### BEST MODE

Hereinafter, preferred embodiments of the present disclosure will be described in detail. However, the description proposed herein is just a preferable example for the purpose of illustrations only, not intended to limit the scope of the disclosure, and each constitutional element may be modified diversely or may be combined optionally. Therefore, it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the expression 'A and/or B' means 'A, B or both of them'.

Specific terms used in the following description are for illustrative purposes and are not limiting. The term, such as 'top', 'bottom', 'left', 'right', 'front', 'rear', 'internal' or 'external' showing a direction indicates the direction in the drawings to which it is referred, or indicates the direction toward the geometrical center of the corresponding apparatus, system and members thereof, or the direction away from the same. In addition to the terms themselves, the terms include words including them, derivatives thereof, and words of similar meanings.

As used herein, the term 'alkyl group' may independently represent a linear or branched chain and refers to a substituted or non-substituted hydrocarbon.

The term 'substituted or non-substituted' means that the alkyl group is substituted with at least one substituent selected from the group consisting of: deuterium; a halogen group; a nitrile group; a nitro group; a hydroxyl group; -COOH; an alkoxy group; an alkyl group; a cycloalkyl group; an alkenyl group; a cyclolakenyl group; an aryl group; a heterocyclic group containing at least one of N, O, S and P atoms; and a heteroaryl group, or has no substituent.

In one aspect of the present disclosure, there is provided a sulfur-carbon composite which can be used as a positive electrode material of a lithium sulfur secondary battery.

The sulfur-carbon composite includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with an amphiphilic polythiophene.

As used herein, the term 'amphiphilic' refers to a characteristic including both a non-polar hydrophobic moiety and a polar hydrophilic moiety. For example, an amphiphilic compound refers to a compound having a structure including both a non-polar hydrophobic moiety and a polar hydrophilic moiety. As such, 'amphiphilic polythiophene' refers to a polythiophene having a structure including both a non-polar hydrophobic moiety and a polar hydrophilic moiety.

As used herein, the polythiophene refers to a polymer containing thiophene as a repeating unit. The thiophene may be substituted with an alkyl group at an optional position, wherein the alkyl group may be a substituted or non-substituted alkyl group.

According to an embodiment of the present disclosure, the amphiphilic polythiophene includes 3-alkyl substituted thiophene as a repeating unit, wherein the alkyl group may include at least one cationic functional group and at least one anionic functional group.

Herein, the cationic functional group refers to a functional group capable of showing a cation in an aqueous solvent. According to an embodiment of the present disclosure, the cationic functional group may include a quaternary amine structure.

Herein, the anionic functional group refers to a functional group capable of showing an anion in an aqueous solvent. For example, the compound containing an anionic functional group may have a property of dissociating a cation, such as proton (H⁺), so that it may provide an anion (-) in an aqueous solvent, such as water.

According to an embodiment of the present disclosure, the anionic functional group may include -SO₃⁻, -COO⁻, -SO₄²⁻, or two or more of them.

According to an embodiment of the present disclosure, the amphiphilic polythiophene may provide excellent binding force with a porous carbonaceous matrix by the nonpolar moiety in which the thiophene repeating unit is present in the structure, and may impart hydrophilicity to the surface of the sulfur-carbon composite by the polar moiety in which the cationic functional group and the anionic functional group are present.

According to an embodiment of the present disclosure, the anionic functional group contained in the amphiphilic polythiophene may provide an anion to the surface of the sulfur-carbon composite coated with the amphiphilic polythiophene. Therefore, it is possible to provide an effect of improving the electrical conductivity of the sulfur-carbon composite, but the effects of the present disclosure are not limited thereto.

According to an embodiment of the present disclosure, the amphiphilic polythiophene may include 3-alkyl substituted thiophene as a repeating unit. Herein, '3-alkyl substituted thiophene' may have a structure having an alkyl group substituent at 3-position of thiophene. Herein, the alkyl group substituent at 3-position may have 1-80, 1-50, 1-40, 1-30, 1-20, or 1-15 carbon atoms.

According to another embodiment of the present disclosure, the amphiphilic polythiophene may have at least one structure selected from the following Chemical Formula 1 to Chemical Formula 3:

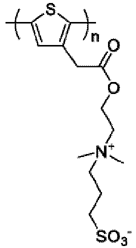

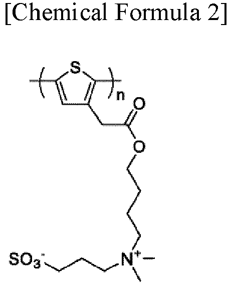

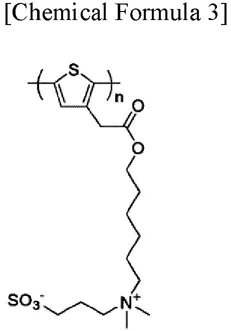

According to an embodiment of the present disclosure, in the chemical formulae of polythiophene, n is not particularly limited. For example, n may be selected from such a range that the polythiophene may have a weight average molecular weight of 200-5,000,000 g/mol, but the scope of the present disclosure is not limited thereto.

According to an embodiment of the present disclosure, the structure of the sulfur-carbon composite may be divided into a coating structure formed from the amphiphilic polythiophene and a core structure containing a porous carbonaceous matrix and a sulfur-containing compound.

The porous carbonaceous matrix forming the core structure may function to improve the conductivity of the sulfur-carbon composite and to support the sulfur-containing compound so that the sulfur utilization efficiency may be improved, but the mechanism of the present disclosure is not limited thereto.

The porous carbonaceous matrix is a material having a large number of fine pores, and the sulfur-containing compound is supported in at least one of the outer surface of the porous carbonaceous matrix and the inner surfaces of the pores of the porous carbonaceous matrix.

According to an embodiment of the present disclosure, the porous carbonaceous matrix includes a large number of fine pores on the surface thereof and inside thereof. For example, the fine pores may have an average diameter (D₅₀) of 5-100 nm, particularly 5-80 nm, 5-60 nm, or 5-50 nm.

The porous carbonaceous matrix is not particularly limited in its material, as long as it includes a large number of fine pores as mentioned above so that the sulfur-containing compound may be supported.

According to an embodiment of the present disclosure, particular examples of the material of the porous carbonaceous matrix include: carbon black, carbon fibers, carbon nanotubes (CNTs), graphene, graphene oxide (GO), reduced graphene oxide (rGO), graphite, graphite nanofibers (GNFs), carbon nanofibers (CNFs), activated carbon fibers (ACFs), natural graphite, artificial graphite, expandable graphite, activated carbon, fullerene, or two or more materials of them.

According to an embodiment of the present disclosure, when carbon nanotubes are used as a material of the porous carbonaceous matrix, the carbon nanotubes may include single-walled carbon nanotubes (SWCNTs), multi-walled carbon nanotubes (MWCNTs) or both.

According to another embodiment of the present disclosure, when carbon nanotubes are used as a material of the porous carbonaceous matrix, the carbon nanotubes may include entangled carbon nanotubes (CNTs) formed as secondary structures by the aggregation of a plurality of carbon nanotubes as primary structures.

According to an embodiment of the present disclosure, the entangled carbon nanotubes may be characterized in that they have improved porosity as compared to the carbon nanotubes as primary structures by virtue of the interstitial volumes formed by the entanglement of the carbon nanotubes as primary structure.

According to an embodiment of the present disclosure, the porous carbonaceous matrix may have a pore size of 10-100 µm, particularly 20-50 µm, but is not limited thereto. When the pore size of the porous carbonaceous matrix falls within the above-defined range, it is possible to provide an advantageous effect in terms of controlling the solid content during the preparation of a slurry for forming an electrode active material layer, and physical properties of an electrode, such as adhesion, and performance of a battery (output, capacity, etc.)

According to an embodiment of the present disclosure, the porous carbonaceous matrix may have a pore volume of 1-5 cm³/g, particularly 1-4 cm³/g. For example, the pore volume may be a value determined by the calculation through the N₂ isotherm analysis based on adsorption of liquid nitrogen.

According to an embodiment of the present disclosure, the porous carbonaceous matrix may have a BET specific surface area of 150-2,000 m²/g, particularly 250-700 m²/g, but it not limited thereto. The BET specific surface area is determined by the BET method, and may be a value determined by a known method. For example, the BET specific surface area may be determined by using BELSORP mini II available from BEL Japan Co. from the nitrogen gas adsorption under a liquid nitrogen temperature (77K).

According to an embodiment of the present disclosure, the sulfur-containing compound may include inorganic sulfur (S₈), lithium sulfide (Li₂S), lithium polysulfide (Li₂Sₓ, 2 ≤ x ≤ 8), disulfide compound, or a mixture of two or more of them, but is not limited thereto.

According to an embodiment of the present disclosure, the porous carbonaceous matrix and the sulfur-containing compound may be mixed at a weight ratio of 1:9-9:1, particularly 2:8-8:2, and more particularly 3:7-7:3, or 4:6-2:8.

According to an embodiment of the present disclosure, the core structure of the sulfur-carbon composite may be formed by mixing the porous carbonaceous matrix with the sulfur-containing compound, followed by heat treatment. For example, the heat treatment may be carried out at a temperature of 130-200°C, particularly 130-180°C, or 150-160°C.

As described above, in one aspect of the present disclosure, there is provided a sulfur-carbon composite which includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with an amphiphilic polythiophene.

According to an embodiment of the present disclosure, the sulfur-carbon composite may have an average particle size (D₅₀) of 10-100 µm, particularly 20-50 µm.

According to an embodiment of the present disclosure, the total content of the amphiphilic polythiophene may be 0.1-10 wt% based on the total weight of the sulfur-carbon composite, but is not limited thereto. Particularly, the total content of the amphiphilic polythiophene may be 0.1-5 wt%, particularly 0.1-1 wt%, 0.2-0.8 wt%, 0.3-0.7 wt%, 0.3-0.6 wt%, 0.4-0.6 wt%, or 0.5 wt%, based on the total weight of the sulfur-carbon composite. When the content of the amphiphilic polythiophene falls within the above-defined range, it is possible to provide a more advantageous effect in terms of improvement of the life of a lithium-sulfur battery using the sulfur-carbon composite, but the scope of the present disclosure is not limited thereto.

In another aspect of the present disclosure, there is provided a method for preparing the above-described sulfur-carbon composite.

The method for preparing a sulfur-carbon composite includes the steps of: preparing a non-coated sulfur-carbon composite including: a porous carbonaceous matrix; and a sulfur-containing compound supported in at least one of the outer surface of the porous carbonaceous matrix and the inner surfaces of the pores of the porous carbonaceous matrix; coating the surface of the non-coated sulfur-carbon composite totally or at least partially with an amphiphilic thiophene monomer; and providing a sulfur-carbon composite totally or partially surface-coated with an amphiphilic polythiophene formed through the polymerization of the coated amphiphilic thiophene monomer.

In the method, reference will be made to be above description about the porous carbonaceous matrix, the sulfur-containing compound and the amphiphilic polythiophene.

First, the step of preparing a non-coated sulfur-carbon composite includes mixing the porous carbonaceous matrix with the sulfur-containing compound. According to an embodiment of the present disclosure, the porous carbonaceous matrix and the sulfur-containing compound may be mixed at a weight ratio of 1:9-9: 1, particularly 2:8-8:2, and more particularly 3:7-7:3, or 4:6-2:8.

According to an embodiment of the present disclosure, the method may further include a step of pulverizing the resultant mixture of the porous carbonaceous matrix with the sulfur-containing compound, after mixing them. It is possible to improve the mixing homogeneity of the porous carbonaceous matrix and the sulfur-containing compound through the pulverization, but the scope of the present disclosure is not limited thereto.

According to an embodiment of the present disclosure, the step of preparing a non-coated sulfur-carbon composite includes, after mixing (or mixing and pulverizing) the porous carbonaceous matrix with the sulfur-containing compound, a step of carrying out heat treatment. For example, the heat treatment may be carried out at a temperature of 130-200°C, particularly 130-180°C, or 150-160°C. It is possible to improve the mechanical strength of the resultant sulfur-carbon composite through the heat treatment, but the scope of the present disclosure is not limited thereto.

Next, the surface of the non-coated sulfur-carbon composite is coated totally or at least partially with an amphiphilic thiophene monomer.

According to an embodiment of the present disclosure, the method for preparing the sulfur-carbon composite may further include a step of preparing an amphiphilic thiophene monomer, including the steps of:
(S10) activating the carboxylic acid group of 3-carboxyalkyl thiophene;
(S20) reacting the activated 3-carboxyalkyl thiophene compound with a dialkylaminoalcohol compound to form a dialkylaminoalkyl thiophenylalkylcarboxylate compound; and
(S30) substituting the dialkylaminoalkyl thiophenylalkylcarboxylate compound with at least one anionic functional group to obtain the amphiphilic thiophene monomer.

According to an embodiment of the present disclosure, the coating may be carried out by allowing the sulfur-carbon composite to be in contact with the amphiphilic thiophene monomer. For example, the surface of the sulfur-carbon composite may be coated by dipping the sulfur-carbon composite in a dispersion containing the amphiphilic thiophene monomer dispersed therein and carrying out stirring.

According to an embodiment of the present disclosure, the dispersion containing the amphiphilic thiophene monomer dispersed therein may include the amphiphilic thiophene monomer dispersed in an aqueous solvent, such as water, at a concentration of 0.1-10 wt%, 0.1-5 wt%, 0.1-1 wt%, 0.1-0.8 wt%, 0.1-0.5 wt%, 0.2-0.5 wt%, 0.3-0.5 wt%, or 0.4-0.5 wt%, but the scope of the present disclosure is not limited thereto.

According to an embodiment of the present disclosure, the content of the coated amphiphilic thiophene monomer may be 0.1-10 wt%, 0.1-5 wt%, 0.1-3 wt%, 0.1-1 wt%, or 0.3-0.8 wt%, based on the total weight of the coated sulfur-carbon composite. The content of the coated amphiphilic thiophene monomer may be calculated from an increment of weight of the coated sulfur-carbon composite as compared to the non-coated sulfur-carbon composite.

Then, polymerization of the coated thiophene monomer is carried out.

According to an embodiment of the present disclosure, the polymerization of the amphiphilic thiophene monomer may be an in-situ reaction.

The surface of the sulfur-carbon composite may be totally or partially coated with the amphiphilic polythiophene through the polymerization.

According to an embodiment of the present disclosure, the polymerization may be carried out in the presence of a polymerization initiator. For example, the polymerization initiator may include ammonium persulfate, but is not limited thereto.

According to an embodiment of the present disclosure, the polymerization is carried out preferably at a temperature where the amphiphilic thiophene monomer is not decomposed. For example, the polymerization may be carried out at 60-100°C, particularly at 70°C, but is not limited thereto.

According to an embodiment of the present disclosure, in the step of preparing the amphiphilic thiophene monomer, the 3-carboxyalkyl thiophene may include 2-thiopheneacetic acid.

According to an embodiment of the present disclosure, in the step of preparing the amphiphilic thiophene monomer, the dialkylaminoalcohol compound may include 2-dimethylaminoethanol, 2-dimethylaminobutanol, 6-dimethylaminohexanol, or a mixture of two or more of them.

According to an embodiment of the present disclosure, in the step of preparing the amphiphilic thiophene monomer, the substitution with the anionic functional group may be carried out by using a cyclic sulfonic acid compound. Particularly, the substitution with the anionic functional group may be carried out through the ring-opening reaction of a cyclic sulfonic acid compound. Herein, the amphiphilic thiophene monomer substituted with the anionic functional group through the ring-opening reaction of the cyclic sulfonic acid compound may include a sulfonic acid group as an anionic functional group.

According to an embodiment of the present disclosure, in the step of preparing the amphiphilic thiophene monomer, the substitution with the anionic functional group may be carried out by using 1,3-propane sultone.

In this manner, it is possible to obtain a sulfur-carbon composite which includes: a porous carbonaceous matrix; and a sulfur-containing compound contained in at least one of the outer surface of the porous carbonaceous matrix and the inner surfaces of the pores of the porous carbonaceous matrix, and is totally or partially surface-coated with an amphiphilic polythiophene.

In still another aspect of the present disclosure, there is provided a positive electrode for a lithium-sulfur battery including the above-described sulfur-carbon composite and a binder polymer.

According to an embodiment of the present disclosure, the binder polymer may be used with no particular limitation, as long as it is a binder that may be used for a positive electrode of a lithium-sulfur battery. For example, the binder may include polyvinylidene fluoride (PVDF), particularly PVDF dispersed in N-methyl-2-pyrrolidone (NMP), but is not limited thereto.

According to another embodiment of the present disclosure, the binder polymer may include an aqueous binder, such as styrene butadiene rubber (SBR), particularly an aqueous binder dispersed in an aqueous solvent, such as water, but is not limited thereto.

According to another embodiment of the present disclosure, the positive electrode for a lithium-sulfur battery may further include, besides the binder, a conductive material, an additive, or the like. Herein, any conventional types of conductive material and additive may be used, and thus detailed description thereof will be omitted.

According to still another embodiment of the present disclosure, the positive electrode for a lithium-sulfur battery may include a positive electrode current collector, and a positive electrode active material layer coated on one surface or both surfaces of the positive electrode current collector and including the sulfur-carbon composite in combination with the binder polymer.

Herein, the positive electrode current collector is not particularly limited, as long as it has high conductivity, while not causing any chemical change in the corresponding battery.

According to an embodiment of the present disclosure, the positive electrode including the sulfur-carbon composite shows excellent effects in terms of initial capacity and cycle stability, but the effects of the present disclosure are not limited thereto.

In yet another aspect of the present disclosure, there is provided a lithium-sulfur battery including a positive electrode, a negative electrode, a separator interposed between the positive electrode and the negative electrode and an electrolyte, wherein the positive electrode includes the above-described positive electrode.

According to an embodiment of the present disclosure, the negative electrode and the separator are not particularly limited, as long as they may be used for a lithium-sulfur battery without detracting from the objects of the present disclosure. For example, the negative electrode may include lithium metal.

According to an embodiment of the present disclosure, the separator is not particularly limited, as long as it may be used as a separator of a lithium-sulfur battery. For example, the separator may include a porous polyolefin substrate, and if necessary, may further include inorganic particles on at least one surface of the porous polyolefin substrate. In addition, the separator may further include a binder for binding the inorganic particles, if necessary.

According to another embodiment of the present disclosure, the separator may be a film-shaped electrolyte membrane including a solid electrolyte, and if necessary, may further include a binder for binding the solid electrolyte, if necessary. The solid electrolyte is not particularly limited, as long as it may be used conventionally for a lithium-sulfur battery. Particular examples of the solid electrolyte may include a polymeric solid electrolyte, an inorganic solid electrolyte or a combination thereof.

According to an embodiment of the present disclosure, the electrolyte is not particularly limited, as long as it may be used as an electrolyte of a lithium-sulfur battery. The electrolyte may include a lithium salt and a nonaqueous solvent.

According to an embodiment of the present disclosure, the lithium salt is not particularly limited, as long as it may be used conventionally for an electrolyte of a lithium-sulfur battery. Particular examples of the lithium salt may include, but are not limited to: LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, CH₃SO₃Li, CF₃SO₃Li, (CF₃SO₂)₂NLi, (C₂F₅SO₂)₂NLi, (SO₂F)₂NLi, (CF₃SO₂)₃CLi, lithium chloroborate, lithium lower aliphatic carboxylate, lithium tetraphenylborate, lithium imide, or two or more of them.

The nonaqueous solvent is not particularly limited, as long as it may be used conventionally for an electrolyte of a lithium-sulfur battery. Particular examples of the nonaqueous solvent may include, but are not limited to: cyclic carbonate solvents, linear carbonate solvent, ester solvents, ketone solvents, or mixed solvents containing two or more of them.

According to an embodiment of the present disclosure, the electrolyte may include (CF₃SO₂)₂NLi as a lithium salt, and a binary solvent of dioxolane (DOL)/dimethoxyethane (DME) as a nonaqueous solvent. For example, the electrolyte may further include a conventional additive, such as LiNO₃.

According to an embodiment of the present disclosure, the outer shape of the lithium-sulfur battery may be selected from a coin-like shape, a cylindrical shape, a pouch-like shape or a prismatic shape with no particular limitation. In addition, the lithium-sulfur battery may be used not only for a battery cell used as a power source of a compact device but also for a unit cell in a middle- or large-scale battery module including a plurality of battery cells, and the application thereof is not particularly limited.

According to an embodiment of the present disclosure, the lithium-sulfur battery using the positive electrode including the sulfur-carbon composite inhibits the elution of lithium polysulfide during the operation of the battery to reduce the shuttle effect, and thus can effectively improve the problem of degradation of capacity caused by the repetition of cycles, but the effects of the present disclosure are not limited thereto.

According to an embodiment of the present disclosure, the lithium-sulfur battery can provide an effect of improving the energy density by increasing the sulfur loading amount in the positive electrode, but the effects of the present disclosure are not limited thereto.

### MODE FOR DISCLOSURE

Hereinafter, the method for preparing a sulfur-carbon composite according to an embodiment of the present disclosure and the method for manufacturing a lithium-sulfur battery using the same will be explained in more detail with reference to Examples. However, the following Examples are for illustrative purposes only, and the scope of the present disclosure is not limited thereto.

### Preparation Example 1-1. Preparation of Amphiphilic Thiophene Monomer (TqAZ2)

An amphiphilic thiophene monomer was prepared as follows according to the following reaction scheme:

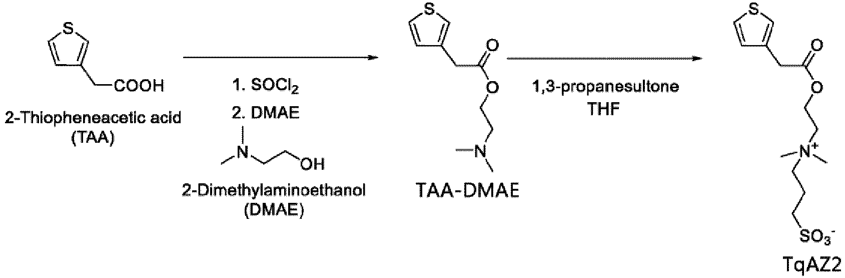

First, 3-thiopheneacetic acid and SOCl₂ were allowed to react with each other in benzene as a solvent at 90°C to activate the carboxyl group. The activated thiophene monomer was dissolved in methylene chloride, and an equivalent amount of triethyleneamine (TEA) and 2-dimethylaminoethanol (DMAE) were added thereto to carry out reaction with DMAE at 30°C, thereby preparing TAA-DMAE. Then, TAA-DMAE was dissolved in THF and allowed to react with an excessive amount of propane sultone at 50°C to obtain an amphiphilic thiophene monomer (TqAZ2).

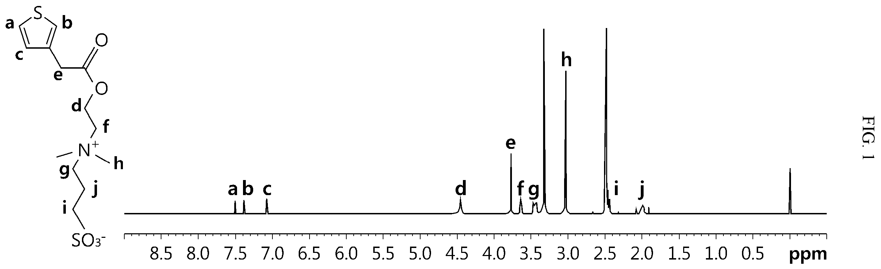

Then, ¹H NMR was carried out to determine whether TqAZ2 was obtained or not. The result of ¹H NMR is shown in FIG. 1.

### Preparation Example 1-2. Preparation of Amphiphilic Polythiophene (P(TqAZ2))

An amphiphilic polythiophene was prepared as follows according to the following reaction scheme:

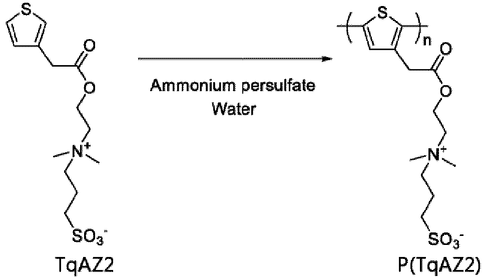

First, TqAZ2 obtained from Preparation Example 1-1 was dissolved in water, and polymerization was carried out by using ammonium persulfate as an oxidizing agent to obtain an amphiphilic polythiophene (P(TqAZ2)). It is shown that the resultant P(TqAZ2) is insoluble in water.

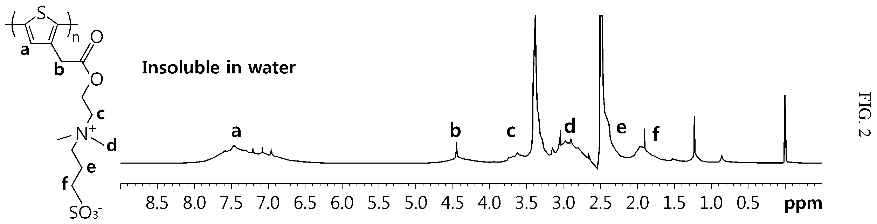

Then, ¹H NMR was carried out to determine whether P(TqAZ2) was obtained or not. The result of ¹H NMR is shown in FIG. 2.

### Preparation Example 2. Preparation of Amphiphilic Thiophene Monomer (TqAZ4)

An amphiphilic thiophene monomer was prepared as follows according to the following reaction scheme:

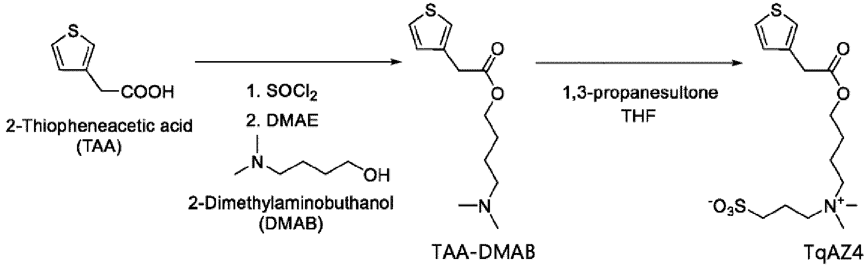

First, 3-thiopheneacetic acid and SOCl₂ were allowed to react with each other in benzene as a solvent at 90°C to activate the carboxyl group. The activated thiophene monomer was dissolved in methylene chloride, and an equivalent amount of triethyleneamine (TEA) and 2-dimethylaminobutanol (DMAB) were added thereto to carry out reaction with DMAB at 30°C, thereby preparing TAA-DMAB. Then, TAA-DMAB was dissolved in THF and allowed to react with an excessive amount of propane sultone at 50°C to obtain an amphiphilic thiophene monomer (TqAZ4).

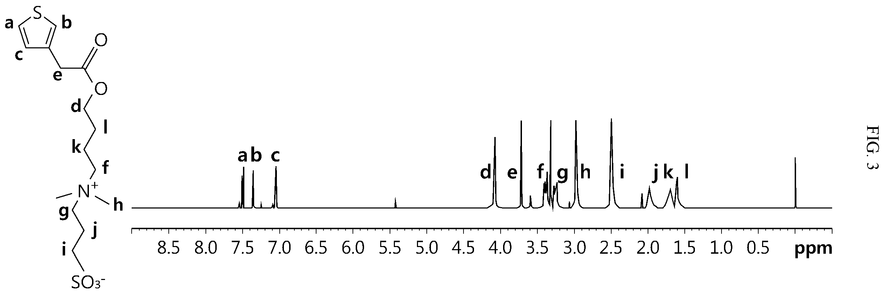

Then, ¹H NMR was carried out to determine whether TqAZ4 was obtained or not. The result of ¹H NMR is shown in FIG. 3.

### Preparation Example 3. Preparation of Amphiphilic Thiophene Monomer (TqAZ6)

An amphiphilic thiophene monomer was prepared as follows according to the following reaction scheme:

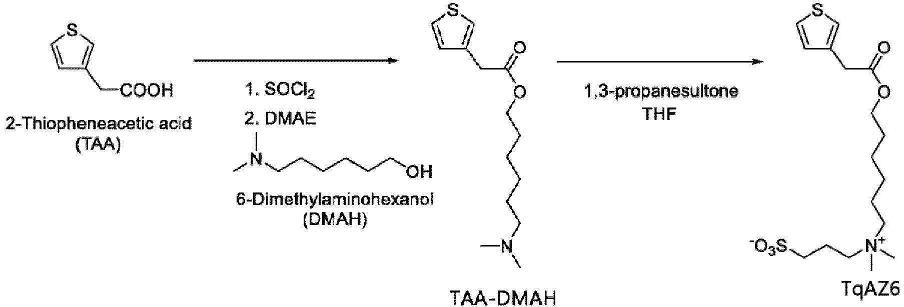

First, 3-thiopheneacetic acid and SOCl₂ were allowed to react with each other in benzene as a solvent at 90°C to activate the carboxyl group. The activated thiophene monomer was dissolved in methylene chloride, and an equivalent amount of triethyleneamine (TEA) and 2-dimethylaminohexanol (DMAH) were added thereto to carry out reaction with DMAH at 30°C, thereby preparing TAA-DMAH. Then, TAA-DMAH was dissolved in THF and allowed to react with an excessive amount of propane sultone at 50°C to obtain an amphiphilic thiophene monomer (TqAZ6).

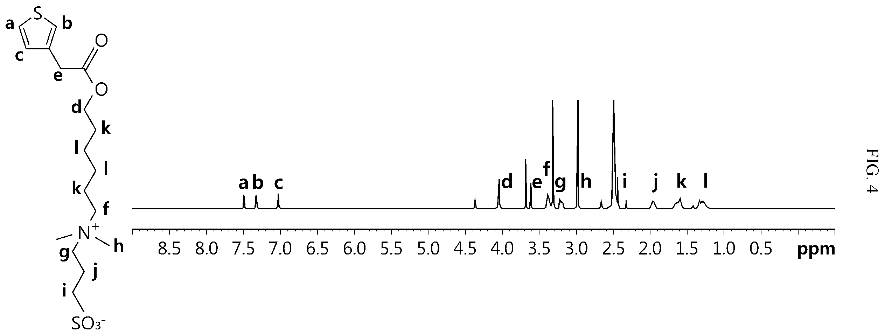

Then, ¹H NMR was carried out to determine whether TqAZ6 was obtained or not. The result of ¹H NMR is shown in FIG. 4.

### [Preparation of Sulfur-Carbon Composite]

The sulfur-carbon composite according to each of Comparative Example 1 and Examples 1-5 was prepared as follows.

### Comparative Example 1. KB-S

Sulfur (S₈) was mixed with ketjen black (KB) at a weight ratio of 7:3, the resultant mixture was pulverized by using a mortar grinder and heat treated at 155°C for 30 minutes to obtain a non-coated sulfur-carbon composite (KB-S) including sulfur supported on the external surface of ketjen black and internal surfaces of the pores of ketjen black.

### Example 1. P(TqAZ2) 3.0 wt%

First, the non-coated sulfur-carbon composite prepared according to Comparative Example 1 was introduced to aqueous solution containing 3.0 wt% of the amphiphilic thiophene monomer (TqAZ2) prepared according to Preparation Example 1-1, dissolved in water, and sonication was carried out for 10 hours and stirring was carried out for 16 hours, followed by filtering, to obtain a sulfur-carbon composite coated with the amphiphilic thiophene monomer.

Then, 0.2 g of the sulfur-carbon composite coated with the amphiphilic thiophene monomer was introduced to 2 mL of water, ammonium persulfate was introduced thereto, and in-situ polymerization of the amphiphilic thiophene monomer was carried out at 70°C for 24 hours, followed by filtering and drying, to obtain a sulfur-carbon composite coated with the amphiphilic polythiophene according to Preparation Example 1-2.

### Example 2. P(TqAZ6) 0.1 wt%

An amphiphilic polythiophene-coated sulfur-carbon composite was obtained in the same manner as Example 1, except that Preparation Example 3 (TqAZ6) was used as an amphiphilic thiophene monomer, and the amphiphilic thiophene monomer was dissolved at 0.1 wt%.

### Example 3. P(TqAZ6) 0.2 wt%

An amphiphilic polythiophene-coated sulfur-carbon composite was obtained in the same manner as Example 1, except that Preparation Example 3 (TqAZ6) was used as an amphiphilic thiophene monomer, and the amphiphilic thiophene monomer was dissolved at 0.2 wt%.

### Example 4. P(TqAZ6) 0.5 wt%

An amphiphilic polythiophene-coated sulfur-carbon composite was obtained in the same manner as Example 1, except that Preparation Example 3 (TqAZ6) was used as an amphiphilic thiophene monomer, and the amphiphilic thiophene monomer was dissolved at 0.5 wt%.

### Example 5. P(TqAZ6) 1.0 wt%

An amphiphilic polythiophene-coated sulfur-carbon composite was obtained in the same manner as Example 1, except that Preparation Example 3 (TqAZ6) was used as an amphiphilic thiophene monomer, and the amphiphilic thiophene monomer was dissolved at 1.0 wt%.

### [Evaluation of Performance of Lithium-Sulfur Coin Cell]

A lithium-sulfur coin cell was obtained as follows in order to evaluate the performance of a battery when using the sulfur-carbon composite prepared as described above for a positive electrode.

The sulfur-carbon composite prepared as described above, polyacrylic acid (PAA) (Mw 450,000) as a binder and carbon (Super P) as a conductive material were mixed at a ratio of 85:10:5, 0.5 wt% of PVA (Mw 9,500) as a dispersing agent was added thereto, and mixing was carried out by using a mixer (Thinky Co.) to a solid content of 18 wt% in an aqueous phase, thereby providing a positive electrode slurry. The resultant positive electrode slurry was coated on aluminum foil to a thickness of 400 µm by using a doctor blade and dried at 50°C for 14 hours.

The positive electrode and lithium metal as a negative electrode were prepared, Celgard 2400 as a separator was interposed between the positive electrode and the negative electrode to provide an electrode assembly, and the electrode assembly was dipped in a liquid electrolyte containing 1 M LiTFSI with 5 wt% of LiNO₃ in DOL/DME (1/1, v/v). In this manner, a lithium-sulfur coin cell was obtained.

### Evaluation of Discharge Capacity after repeating Cycles

The lithium-sulfur coin cell prepared as described above was subjected to repeated charge/discharge cycles by using a battery cycle tester (WBS3000 battery cycler, WonATech) at a current density of 0.5 C with a cut-off voltage of 1.8-2.8 V (vs Li/Li⁺) at a temperature of 25 °C to carry out a charge/discharge cycle test.

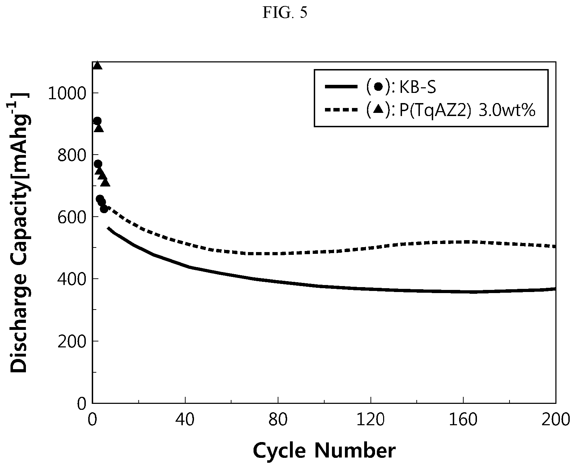

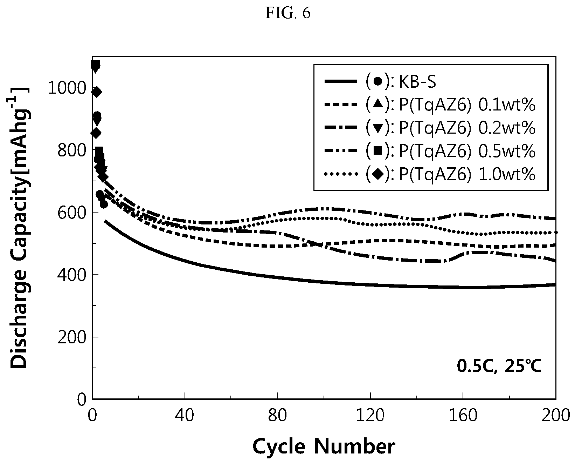

The results of evaluation of the discharge capacity after repeating cycles are shown in FIGS. 5 and 6.

In FIG. 5 and 6, each graph shows the result of Comparative Example 1 (KB/S), Example 1 (P(TqAZ2) 3.0 wt%), Example 2 (P(TqAZ6) 0.1 wt%), Example 3 (P(TqAZ6) 0.2 wt%), Example 4 (P(TqAZ6) 0.5 wt%) or Example 5 (P(TqAZ2) 1.0 wt%).

Referring to FIG. 5, the lithium-sulfur battery using the sulfur-carbon composite according to Example 1 shows an improved capacity retention after repeating cycles, as compared to Comparative Example 1.

Referring to FIG. 6, similarly, the lithium-sulfur battery using the sulfur-carbon composite according to each of Examples 2-5 shows an improved capacity retention after repeating cycles, as compared to Comparative Example 1. Particularly, it is shown that Example 4 shows the highest capacity retention.

## Claims

1. A sulfur-carbon composite which comprises:
a porous carbonaceous matrix; and a sulfur-containing compound contained in at least one of the outer surface of the porous carbonaceous matrix and the inner surfaces of the pores of the porous carbonaceous matrix, and
is totally or partially surface-coated with an amphiphilic polythiophene.

2. The sulfur-carbon composite according to claim 1, wherein the amphiphilic polythiophene comprises 3-alkyl substituted thiophene as a repeating unit, and the alkyl group as a substituent of the 3-alkyl substituted thiophene comprises at least one cationic functional group and at least one anionic functional group.

3. The sulfur-carbon composite according to claim 2, wherein the cationic functional group comprises a quaternary amine structure.

4. The sulfur-carbon composite according to claim 2, wherein the anionic functional group comprises -SO₃⁻, -COO⁻, -SO₄²⁻, or two or more functional groups thereof.

5. The sulfur-carbon composite according to claim 1, wherein the amphiphilic polythiophene comprises a polymer represented by the following Chemical Formula 1:

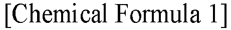

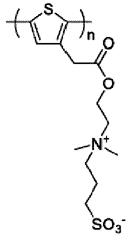

6. The sulfur-carbon composite according to claim 1, wherein the amphiphilic polythiophene comprises a polymer represented by the following Chemical Formula 2:

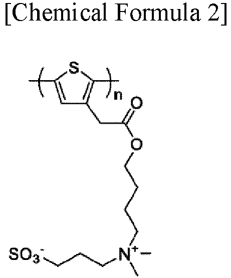

7. The sulfur-carbon composite according to claim 1, wherein the amphiphilic polythiophene comprises a polymer represented by the following Chemical Formula 3:

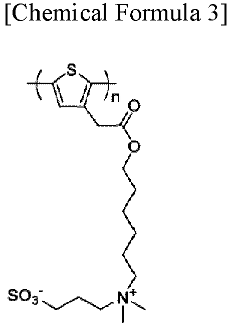

8. A method for preparing a sulfur-carbon composite, comprising the steps of:
preparing a non-coated sulfur-carbon composite comprising: a porous carbonaceous matrix; and a sulfur-containing compound supported in at least one of the outer surface of the porous carbonaceous matrix and the inner surfaces of the pores of the porous carbonaceous matrix;
coating the surface of the non-coated sulfur-carbon composite totally or at least partially with an amphiphilic thiophene monomer; and
providing a sulfur-carbon composite totally or partially surface-coated with an amphiphilic polythiophene formed through the polymerization of the coated amphiphilic thiophene monomer.

9. The method for preparing a sulfur-carbon composite according to claim 8, wherein the amphiphilic thiophene monomer is obtained by a method comprising the steps of:
(S10) activating the carboxylic acid group of 3-carboxyalkyl thiophene;
(S20) reacting the activated 3-carboxyalkyl thiophene compound with a dialkylaminoalcohol compound to form a dialkylaminoalkyl thiophenylalkylcarboxylate compound; and
(S30) substituting the dialkylaminoalkyl thiophenylalkylcarboxylate compound with at least one anionic functional group to obtain the amphiphilic thiophene monomer.

10. The method for preparing a sulfur-carbon composite according to claim 9, wherein the 3-carboxyalkyl thiophene comprises 2-thiopheneactic acid.

11. The method for preparing a sulfur-carbon composite according to claim 9, wherein the dialkylaminoalcohol compound comprises 2-dimethylaminoethanol, 2-dimethylaminobutanol, 6-dimethylaminohexanol, or a mixture of two or more of them.

12. The method for preparing a sulfur-carbon composite according to claim 9, wherein the substitution with an anionic functional group is carried out by using a cyclic sulfonic acid compound.

13. The method for preparing a sulfur-carbon composite according to claim 9, wherein the substitution with an anionic functional group is carried out by using 1,3-propanesultone.

14. A positive electrode for a lithium-sulfur battery, comprising: the sulfur-carbon composite as defined in any one of claims 1 to 7; and a binder polymer.

15. A lithium-sulfur battery comprising a positive electrode, a negative electrode, a separator interposed between the positive electrode and the negative electrode, and an electrolyte, wherein the positive electrode comprises the positive electrode as defined in claim 14.

## Patentansprüche

1. Schwefel-Kohlenstoff-Komposit, das aufweist:
eine poröse kohlenstoffhaltige Matrix; und eine schwefelhaltige Verbindung, die in mindestens einer von der äußeren Fläche der porösen kohlenstoffhaltigen Matrix und den inneren Flächen der Poren der porösen kohlenstoffhaltigen Matrix enthalten ist, und
das ganz oder teilweise mit einem amphiphilen Polythiophen flächenbeschichtet ist.

2. Schwefel-Kohlenstoff-Komposit nach Anspruch 1, wobei das amphiphile Polythiophen 3-alkylsubstituiertes Thiophen als Wiederholungseinheit aufweist und die Alkylgruppe als Substituent des 3-alkylsubstituierten Thiophens mindestens eine kationische funktionelle Gruppe und mindestens eine anionische funktionelle Gruppe aufweist.

3. Schwefel-Kohlenstoff-Komposit nach Anspruch 2, wobei die kationische funktionelle Gruppe eine quartäre Aminstruktur aufweist.

4. Schwefel-Kohlenstoff-Komposit nach Anspruch 2, wobei die anionische funktionelle Gruppe -SO₃⁻, -COO⁻, -SO₄²⁻ oder zwei oder mehr funktionelle Gruppen davon aufweist.

5. Schwefel-Kohlenstoff-Komposit nach Anspruch 1, wobei das amphiphile Polythiophen ein Polymer aufweist, das durch die folgende chemische Formel 1 repräsentiert wird:

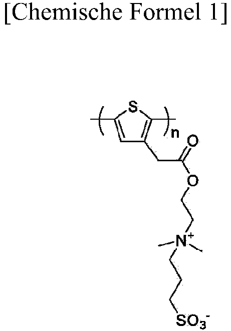

6. Schwefel-Kohlenstoff-Komposit nach Anspruch 1, wobei das amphiphile Polythiophen ein Polymer aufweist, das durch die folgende chemische Formel 2 repräsentiert wird:

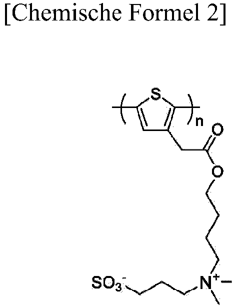

7. Schwefel-Kohlenstoff-Komposit nach Anspruch 1, wobei das amphiphile Polythiophen ein Polymer aufweist, das durch die folgende chemische Formel 3 repräsentiert wird:

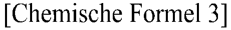

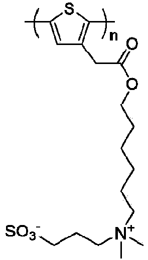

8. Verfahren zur Herstellung eines Schwefel-Kohlenstoff-Komposits, aufweisend die Schritte:
Herstellen eines unbeschichteten Schwefel-Kohlenstoff-Komposits, aufweisend: eine poröse kohlenstoffhaltige Matrix; und eine schwefelhaltige Verbindung, die in mindestens einer von der äußeren Fläche der porösen kohlenstoffhaltigen Matrix und den inneren Flächen der Poren der porösen kohlenstoffhaltigen Matrix geträgert ist;
Beschichten der Fläche des unbeschichteten Schwefel-Kohlenstoff-Komposits ganz oder mindestens teilweise mit einem amphiphilen Thiophenmonomer; und
Bereitstellen eines Schwefel-Kohlenstoff-Komposits, das ganz oder teilweise mit einem amphiphilen Polythiophen flächenbeschichtet ist, das durch die Polymerisation des beschichteten amphiphilen Thiophenmonomers gebildet ist.

9. Verfahren zur Herstellung eines Schwefel-Kohlenstoff-Komposits nach Anspruch 8, wobei das amphiphile Thiophenmonomer durch ein Verfahren erhalten wird, das die Schritte aufweist:
(S10) Aktivieren der Carbonsäuregruppe von 3-Carboxyalkylthiophen;
(S20) Umsetzen der aktivierten 3-Carboxyalkylthiophen-Verbindung mit einer Dialkylaminoalkohol-Verbindung, um eine Dialkylaminoalkyl-thiophenylalkylcarboxylat-Verbindung zu bilden; und
(S30) Substituieren der Dialkylaminoalkyl-thiophenylalkylcarboxylat-Verbindung mit mindestens einer anionischen funktionellen Gruppe, um das amphiphile Thiophenmonomer zu erhalten.

10. Verfahren zur Herstellung eines Schwefel-Kohlenstoff-Komposits nach Anspruch 9, wobei das 3-Carboxyalkylthiophen 2-Thiophenessigsäure aufweist.

11. Verfahren zur Herstellung eines Schwefel-Kohlenstoff-Komposits nach Anspruch 9, wobei die Dialkylaminoalkohol-Verbindung 2-Dimethylaminoethanol, 2-Dimethylaminobutanol, 6-Dimethylaminohexanol oder eine Mischung von zwei oder mehr davon aufweist.

12. Verfahren zur Herstellung eines Schwefel-Kohlenstoff-Komposits nach Anspruch 9, wobei die Substitution mit einer anionischen funktionellen Gruppe unter Verwendung einer cyclischen Sulfonsäureverbindung durchgeführt wird.

13. Verfahren zur Herstellung eines Schwefel-Kohlenstoff-Komposits nach Anspruch 9, wobei die Substitution mit einer anionischen funktionellen Gruppe unter Verwendung von 1,3-Propansulton durchgeführt wird.

14. Positive Elektrode für eine Lithium-Schwefel-Batterie, aufweisend: das Schwefel-Kohlenstoff-Komposit, wie in einem der Ansprüche 1 bis 7 definiert; und ein Binderpolymer.

15. Lithium-Schwefel-Batterie, aufweisend eine positive Elektrode, eine negative Elektrode, einen Separator, der zwischen der positiven Elektrode und der negativen Elektrode angeordnet ist, und einen Elektrolyten, wobei die positive Elektrode die positive Elektrode, wie in Anspruch 14 definiert, aufweist.

## Revendications

1. Composite de soufre-carbone qui comprend :
une matrice carbonée poreuse ; et un composé contenant du soufre contenu dans soit la surface extérieure de la matrice carbonée poreuse, soit les surfaces intérieures des pores de la matrice carbonée poreuse, et
est revêtu en surface totalement ou partiellement par un polythiophène amphiphile.

2. Composite de soufre-carbone selon la revendication 1, dans lequel le polythiophène amphiphile comprend un thiophène substitué par 3-alkyl, étant une unité de répétition, et le groupe alkyle étant un substituant du thiophène substitué par 3-alkyl comprend au moins un groupe fonctionnel cationique et au moins un groupe fonctionnel anionique.

3. Composite de soufre-carbone selon la revendication 2, dans lequel le groupe fonctionnel cationique comprend une structure d'amine quaternaire.

4. Composite de soufre-carbone selon la revendication 2, dans lequel le groupe fonctionnel anionique comprend -SO₃⁻, -COO⁻, -SO₄²⁻, ou deux groupes fonctionnels ou plus de ces derniers.

5. Composite de soufre-carbone selon la revendication 1, dans lequel le polythiophène amphiphile comprend un polymère représenté par la Formule chimique 1 ci-après :

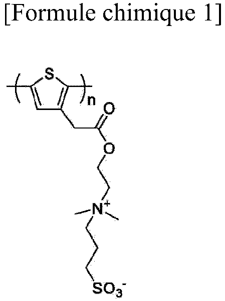

6. Composite de soufre-carbone selon la revendication 1, dans lequel le polythiophène amphiphile comprend un polymère représenté par la Formule chimique 2 ci-après :

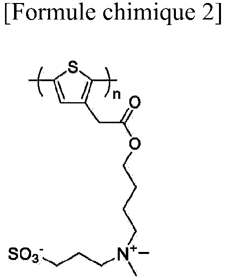

7. Composite de soufre-carbone selon la revendication 1, dans lequel le polythiophène amphiphile comprend un polymère représenté par la Formule chimique 3 ci-après :

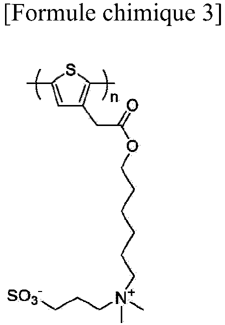

8. Procédé de préparation d'un composite de soufre-carbone, comprenant les étapes consistant à :
préparer un composite de soufre-carbone non-revêtu comprenant : une matrice carbonée poreuse ; et un composé contenant du soufre porté dans soit la surface extérieure de la matrice carbonée poreuse, soit les surfaces intérieures des pores de la matrice carbonée poreuse ;
revêtir la surface du composite de soufre-carbone non-revêtu totalement ou au moins partiellement par un monomère de thiophène amphiphile ; et
fournir un composite de soufre-carbone revêtu en surface totalement ou partiellement par un polythiophène amphiphile formé par la polymérisation du monomère de thiophène amphiphile revêtu.

9. Procédé de préparation d'un composite de soufre-carbone selon la revendication 8, dans lequel le monomère de thiophène amphiphile est obtenu par un procédé comprenant les étapes consistant à :
(S10) activer le groupe acide carboxylique de thiophène de 3-carboxyalkyle ;
(S20) faire réagir le composé de thiophène de 3-carboxyalkyle activé avec un composé de dialkylaminoalcool pour former un composé de dialkylaminoalkyl thiophénylalkylcarboxylate ; et
(S30) substituer le composé de dialkylaminoalkyl thiophénylalkylcarboxylate par au moins un groupe fonctionnel anionique pour obtenir le monomère de thiophène amphiphile.

10. Procédé de préparation d'un composite de soufre-carbone selon la revendication 9, dans lequel le thiophène de 3-carboxyalkyle comprend un acide 2-thiophèneacétique.

11. Procédé de préparation d'un composite de soufre-carbone selon la revendication 9, dans lequel le composé de dialkylaminoalcool comprend 2-diméthylaminoéthanol, 2-diméthylaminobutanol, 6-diméthylaminohexanol, ou un mélange de deux de ces derniers ou plus.

12. Procédé de préparation d'un composite de soufre-carbone selon la revendication 9, dans lequel la substitution par un groupe fonctionnel anionique est effectuée en utilisant un composé d'acide sulfonique cyclique.

13. Procédé de préparation d'un composite de soufre-carbone selon la revendication 9, dans lequel la substitution par un groupe fonctionnel anionique est effectuée en utilisant 1,3-propanesultone.

14. Électrode positive pour une batterie au lithium-soufre, comprenant : le composite de soufre-carbone défini selon l'une quelconque des revendications 1 à 7 ; et un polymère liant.

15. Batterie au lithium-soufre comprenant une électrode positive, une électrode négative, un séparateur interposé entre l'électrode positive et l'électrode négative, et un électrolyte, dans lequel l'électrode positive comprend l'électrode positive définie selon la revendication 14.
